# EUROPÄISCHE PATENTSCHRIFT

(11) **EP 3 822 329 B1**
(45) Veröffentlichungstag und Bekanntmachung des Hinweises auf die Patenterteilung: **02.10.2024**
(21) Anmeldenummer: 20206657.7
(22) Anmeldetag: 10.11.2020
(51) Int. Cl.: C09J 133/06, C08K 5/49, C08F 220/18, C08L 57/10, C08L 63/00, C08L 93/04, C08K 5/523, C08K 5/5399

(54) **FLAMMGESCHÜTZTE HAFTKLEBMASSE**
FIRE-RETARDANT PRESSURE SENSITIVE ADHESIVE
ADHÉSIF IGNIFUGE SENSIBLE À LA PRESSION

(30) Priorität: 18.11.2019 DE 102019217753
(43) Veröffentlichungstag der Anmeldung: 19.05.2021
(73) Patentinhaber: tesa SE, 22848 Norderstedt (DE)
(72) Erfinder: BUDDE, Felix, 20255 Hamburg (DE); STREBL-PFARR, Maike, 22529 Hamburg (DE); HOMANN, Vanessa, 22527 Hamburg (DE)
(74) Vertreter: tesa SE

(56) Entgegenhaltungen:
- EP-A1- 3 093 322
- WO-A1-2015/148314
- WO-A1-2020/225391
- WO-A1-95/32257
- CN-A- 106 520 031
- JP-A- 2013 199 651
- US-A1- 2016 326 402
- LI YUANLIN ET AL: "Characteristics and Kinetics of Rosin Pentaerythritol Ester via Oxidation Process under Ultraviolet Irradiation", MOLECULES, vol. 23, no. 11, 30 October 2018 (2018-10-30), pages 2816, XP055786707, DOI: 10.3390/molecules23112816
- WATSON INTERNATIONAL LTD.: "PHENOXYCYCLOPHOSPHAZENE SAFETY DATA SHEET", 24 October 2016 (2016-10-24), pages 1 - 5, XP055786733, Retrieved from the Internet <URL:https://warshel.com/wp-content/uploads/2015/07/Phenoxycycloposphazene-CAS-1184-10-7-MSDS.pdf> [retrieved on 20210317]

## Beschreibung

Die Erfindung betrifft das technische Gebiet der Haftklebmassen, wie sie in verschiedensten Bereichen der Technik zum temporären oder dauerhaften Verbinden zweier Substrate verwendet werden. Spezifischer wird eine Haftklebmasse mit verbesserten Flammschutzeigenschaften vorgeschlagen.

In vielen Bereichen der Technik, beispielsweise im Bauwesen und in der Fahr- sowie Flugzeugindustrie werden zunehmend anspruchsvolle Anforderungen hinsichtlich des Flammschutzverhaltens verbauter Teile gestellt. Es sind diesbezüglich verschiedene, auf spezielle Erfordernisse abgestimmte Testmethoden entwickelt worden. So müssen Bauteile und Hilfsmittel, die im Flugzeugbau verwendet werden, einen so genannten vertikalen Bunsenbrennertest bestehen. Dies gilt auch für Klebebänder, die im Flugzeugbau zum Beispiel für die Befestigung von Isolierpaketen oder Bodenbelägen verwendet werden. Dementsprechend werden für solche Klebebänder flammgeschützte Haftklebmassen benötigt. Wie sich jedoch gezeigt hat, ist die Formulierung von Haftklebmassen mit guten Flammschutzeigenschaften nicht unproblematisch. Eingesetzte Flammschutzmittel führen häufig zu massiven Verlusten bei der Klebkraft und/oder zu deutlichen Verschlechterungen der Scherfestigkeiten. Viele flammgeschützte Haftklebstoffzusammensetzungen zeigen darüber hinaus im Brandfall eine starke Rußentwicklung, die ebenfalls unerwünscht ist. Es besteht also in der Regel ein Zielkonflikt zwischen der geforderten klebtechnischen Leistungsfähigkeit der Haftklebmassen einerseits und den ebenfalls geforderten Flammschutzeigenschaften andererseits.

In der Vergangenheit hat es nicht an Versuchen gefehlt, diesen Zielkonflikt zu entschärfen. So beschreibt US 7,501,169 B2 ein Klebefilmkomposit, das ein Substrat, welches frei von Antimon und Halogenen ist, und ein klebendes Polymer mit einem darauf befindlichen, nicht halogenierten, Phosphat-basierten Flammschutzmittel umfasst.

JP 2011148863 A offenbart eine Zusammensetzung umfassend ein Acrylatpolymer mit einer Monomerenbasis aus Acrylsäure und (Meth)acrylsäureestern mit 1 bis 8 Kohlenstoffatomen in der Alkoholkomponente, ein Phosphazen-Flammschutzmittel, ein Phosphorsäureester-Flammschutzmittel, einen Vernetzer und ein Klebharz, wobei Polymer und Flammschutzmittel sowie die Flammschutzmittel untereinander in bestimmten Relationen vorliegen.

Einen ähnlichen Ansatz verfolgt JP 2013018944 A, wobei das Polymer aus Butylacrylat, einem Monomer mit einer reaktiven funktionellen Gruppe und/oder einem Alkyl(meth)acrylat aufgebaut ist.

JP 2012031422 A beschreibt eine flammgeschützte Haftklebmasse, die ein Acrylatestercopolymer zu 100 Gew.-Teilen, Ammoniumpolyphosphat zu 50 bis 115 Gew.-Teilen, Aluminiumhydroxid zu 40 bis 85 Gew.-Teilen und aliphatische Polyalkohole enthält.

JP 2015067653 A offenbart ein Substrat mit einer darauf aufgebrachten klebenden Zusammensetzung, die ein Klebharz zu 100 Gew.-Teilen, ein Phosphinat-basiertes Flammschutzmittel zu 52 bis 150 Gew.-Teilen und ein Phophatester-basiertes Flammschutzmittel, welches bei Raumtemperatur flüssig vorliegt, zu 10 bis 50 Gew.-Teilen enthält.

EP 3 362 531 A1 hat eine halogenfreie, flammgeschützte Klebstoffzusammensetzung zum Gegenstand, welche einen Klebstoff und eine Flammschutzmittelzusammensetzung umfassend eine Phosphorsäureester-Verbindung und ein Flammschutzmittel ausgewählt aus Melamincyanurat, Melaminpyrophosphat und Phosphinatsalz umfasst.

JP 2017132893 A hat sich eine Haftklebmasse für Bauanwendungen mit guter Klebkraft auf rauen Untergründen und exzellenten Flammschutzeigenschaften zum Ziel gesetzt. Erreicht werden soll dies durch Härten einer Zusammensetzung umfassend ein polymerisierbares (Meth)acrylsäurealkylester-Monomer zu 100 Gew.-Teilen, ein (Meth)acrylsäureester-Polymer mit einem gewichtsmittleren Molekulargewicht von 800.000 bis 3.000.000 zu 10 bis 50 Gew.-Teilen und ein halogenfreies Phosphorsäureester-basiertes Flammschutzmittel zu 5 bis 65 Gew.-Teilen, letztere bezogen auf das Gesamtgewicht der beiden anderen Komponenten, wobei der Anteil des noch nicht abreagierten Monomers an der Gesamtheit dieser Monomere vor dem Härten maximal 1,5 Gew.-% beträgt. Ein ähnlicher Ansatz wird auch in JP 2017179329 A verfolgt.

WO 20148 079853 A1 beschreibt eine Haftklebmasseschicht enthaltend 100 Gew.-Teile eines (Meth)acrylatester-Polymers und 1 bis 60 Gew.-Teile eines halogenfreien Phosphatester-Flammschutzmittels, wobei der Anteil an Restmonomeren nicht mehr als 0,5 Gew.-% beträgt.

CN 108329857 A hat ein einseitiges Klebeband zum Gegenstand, dessen Klebeschicht aus Polyacrylat, Vernetzern, einem ersten und zweiten Flammschutzmittel und einem Lösemittel hergestellt wird, wobei das erste Flammschutzmittel bei Raumtemperatur fest und das zweite bei Raumtemperatur flüssig ist.

EP 3 093 322 A1 offenbart eine Haftklebmasse aus einem Acrylpolymer, welches aus 63 Gew.-% 2-Ethylhexylacrylat, 25 Gew.-% Butylacrylat und 12 Gew.-% Acrylsäure aufgebaut ist, und einem Terpenphenolharz.

JP 2013 199651 A offenbart eine flammwidrige Haftklebmasse aus 30 Gew.-Teilen eines acrylischen Copolymerisats aus Butylacrylat (84 Gew.-%), 2-Ethylhexylacrylat (10 Gew.-%) und Acrylsäure (6 Gew.-%) mit einer T_{g} von -51°C, 30 Gew.-Teilen eines Xylol-Phenol-Novolakharzes und 40 Gew.-Teilen eines Xylol-Novalkharzes. Der Haftklebmasse wurden weiterhin 30 Gew.-Teile eines Phenoxy-substituierten Cyclophosphazens als Flammschutzmittel zugegeben.

Es besteht ein anhaltender Bedarf an Haftklebmassen mit guten Kleb- und Flammschutzeigenschaften. Aufgabe der Erfindung war es, eine solche Haftklebmasse zur Verfügung zu stellen, die insbesondere gute Klebkräfte und Scherfestigkeiten zeigt; zusätzlich war eine möglichst geringe Rußbildung im Brandfall wünschenswert.

Ein erster und allgemeiner Gegenstand der Erfindung, mit dem diese Aufgabe gelöst wird, ist eine Haftklebmasse, die:
- mindestens ein Poly(meth)acrylat und
- mindestens eine aromatische Organophosphorverbindung als Flammschutzmittel enthält und dadurch gekennzeichnet ist, dass
   die dem Poly(meth)acrylat zugrundeliegende Monomerenzusammensetzung
- mindestens einen (Meth)acrylsäureester, dessen Alkoholkomponente mehr als 4 C-Atome enthält;
- mindestens einen (Meth)acrylsäureester, dessen Alkoholkomponente maximal 4 C-Atome enthält; und
- Acrylsäure und/oder (Meth)acrylsäure zu insgesamt mindestens 5 Gew.-% umfasst; und die Haftklebmasse mindestens einen Kolophoniumester enthält.

Eine derartige Haftklebmasse zeigt ein ausgewogenes klebtechnisches Profil und gute flammschützende Wirkung.

Unter einer Haftklebmasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im allgemeinen, grundsätzlich jedoch abhängig von der genauen Art des Haftklebstoffs sowie des Substrats, der Temperatur und der Luftfeuchtigkeit, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebmassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, häufig hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Adhäsion. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' - (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" - (τ/γ) • sin(δ) (τ = Schubspannung, γ = Deformation, δ = Phasenwinkel = Phasenverschiebung zwischen Schubspannungs- und Deformationsvektor).

Eine Masse gilt insbesondere dann als Haftklebmasse und wird im Sinne der Erfindung insbesondere dann als solche definiert, wenn bei 23 °C im Deformationsfrequenzbereich von 10⁰ bis 10¹ rad/sec sowohl G` als auch G" zumindest zum Teil im Bereich von 10³ bis 10⁷ Pa liegen. "Zum Teil" heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird, und wenn zumindest ein Abschnitt der G"-Kurve ebenfalls innerhalb des entsprechenden Fensters liegt.

Unter einem "Poly(meth)acrylat" wird ein Polymer verstanden, welches durch radikalische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Bevorzugt enthält die erfindungsgemäße Haftklebmasse Poly(meth)acrylat zu insgesamt 30 bis 70 Gew.-%, stärker bevorzugt zu insgesamt 35 bis 65 Gew.-%, insbesondere zu insgesamt 40 bis 60 Gew.-%, wie zum Beispiel zu 45 bis 60 Gew.-%, jeweils bezogen auf das Gesamtgewicht der Haftklebmasse. Es können ein (einziges) Poly(meth)acrylat oder mehrere Poly(meth)acrylate enthalten sein; der Pluralausdruck "Poly(meth)acrylate" schließt also - auch im Fortgang der vorliegenden Beschreibung - in seiner Bedeutung ebenso wie der Ausdruck "insgesamt" sowohl das Vorliegen eines einzigen Poly(meth)acrylats als auch das Vorliegen mehrerer Poly(meth)acrylate ein.

Die Glasübergangstemperatur des Poly(meth)acrylats der erfindungsgemäßen Haftklebmasse beträgt bevorzugt < 0 °C, stärker bevorzugt zwischen -20 und -50 °C, insbesondere zwischen -25 und -40 °C, wie zum Beispiel zwischen -28 und -35 °C. Die Glasübergangstemperatur von Polymeren oder von Polymerblöcken in Blockcopolymeren wird in der vorliegenden Anmeldung mittels Dynamischer Scanning Kalorimetrie (DSC) bestimmt. Dazu werden ca. 5 mg einer unbehandelten Polymerprobe in ein Aluminiumtiegelchen (Volumen 25 µl) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt (Testmethode A).

Die dem Poly(meth)acrylat zugrundeliegende Monomerenzusammensetzung umfasst erfindungsgemäß mindestens einen (Meth)acrylsäureester, dessen Alkoholkomponente mehr als 4 C-Atome enthält. Bevorzugt ist der (Meth)acrylsäureester, dessen Alkoholkomponente mehr als 4 C-Atome enthält, ausgewählt aus der Gruppe bestehend aus Isooctylacrylat, Isooctylmethacrylat, 2-Ethylhexylacrylat, 2-Ethylhexylmethacrylat, 2-Propylheptylacrylat und 2-Propylheptylmethacrylat. Besonders bevorzugt ist der (Meth)acrylsäureester, dessen Alkoholkomponente mehr als 4 C-Atome enthält, 2-Ethylhexylacrylat.

(Meth)acrylsäureester, deren Alkoholkomponente mehr als 4 C-Atome enthält, sind in der dem Poly(meth)acrylat der erfindungsgemäßen Haftklebmasse zugrundeliegenden Monomerenzusammensetzung bevorzugt zu insgesamt 50 bis 90 Gew.-%, besonders bevorzugt zu insgesamt 60 bis 80 Gew.-%, und insbesondere zu insgesamt 65 bis 75 Gew.-% enthalten. Es können ein oder mehrere (Meth)acrylsäureester, deren Alkoholkomponente mehr als 4 C-Atome enthält, in der Monomerenzusammensetzung enthalten sein; der Ausdruck "insgesamt" umfasst beide Varianten.

Die dem Poly(meth)acrylat zugrundeliegende Monomerenzusammensetzung umfasst erfindungsgemäß zudem mindestens einen (Meth)acrylsäureester, dessen Alkoholkomponente maximal 4 C-Atome enthält. Bevorzugt ist der (Meth)acrylsäureester, dessen Alkoholkomponente maximal 4 C-Atome enthält, ausgewählt aus der Gruppe bestehend aus n-Butylacrylat, n-Butylmethacrylat und Methylacrylat, insbesondere ist der (Meth)acrylsäureester Methylacrylat.

(Meth)acrylsäureester, deren Alkoholkomponente maximal 4 C-Atome enthält, sind in der dem Poly(meth)acrylat der erfindungsgemäßen Haftklebmasse zugrundeliegenden Monomerenzusammensetzung bevorzugt zu insgesamt 10 bis 40 Gew.-%, besonders bevorzugt zu insgesamt 15 bis 30 Gew.-%, und insbesondere zu insgesamt 20 bis 25 Gew.-% enthalten. Es können ein oder mehrere (Meth)acrylsäureester, deren Alkoholkomponente maximal 4 C-Atome enthält, in der Monomerenzusammensetzung enthalten sein; der Ausdruck "insgesamt" umfasst beide Varianten. In einer besonders bevorzugten Ausführungsform ist in der dem Poly(meth)acrylat der erfindungsgemäßen Haftklebmasse zugrundeliegenden Monomerenzusammensetzung zu mehr als 15 Gew.-%, vorzugsweise mehr als 17%, wie zum Beispiel 20 bis 30 Gew.-% Methylacrylat enthalten.

Die Monomerenzusammensetzung umfasst Acrylsäure und/oder (Meth)acrylsäure bevorzugt zu insgesamt mindestens 6 Gew.-%, insbesondere zu insgesamt mindestens 6,5 Gew.-%. Besonders bevorzugt umfasst die Monomerenzusammensetzung Acrylsäure zu insgesamt mindestens 6 Gew.-%, stärker bevorzugt zu insgesamt mindestens 6,5 Gew.-%.

Die Herstellung der Poly(meth)acrylate geschieht bevorzugt durch konventionelle radikalische Polymerisationen oder kontrollierte radikalische Polymerisationen. Die Poly(meth)acrylate können durch Copolymerisation der Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Bevorzugt werden die Poly(meth)acrylate durch Copolymerisation der Monomere in Lösungsmitteln, besonders bevorzugt in Lösungsmitteln mit einem Siedebereich von 50 bis 150 °C, insbesondere von 60 bis 120 °C, unter Verwendung von 0,01 bis 5 Gew.-%, insbesondere von 0,1 bis 2 Gew.-%, jeweils bezogen auf das Gesamtgewicht der Monomeren, an Polymerisationsinitiatoren hergestellt.

Prinzipiell eignen sich alle üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat und Benzpinacol. Bevorzugte radikalische Initiatoren sind 2,2'-Azobis(2-methylbutyronitril) (Vazo^{®} 67^{™} der Firma DuPont), 2,2'-Azobis(2-methylpropionitril) (2,2'-Azobisisobutyronitril; AIBN; Vazo^{®} 64^{™} der Firma DuPont) und Bis-(4-tert.-Butylcyclohexanyl)-Peroxy-dicarbonat.

Bevorzugte Lösungsmittel für die Herstellung der Poly(meth)acrylate sind Alkohole wie Methanol, Ethanol, n- und iso-Propanol, n- und iso-Butanol, insbesondere Isopropanol und/oder Isobutanol; Kohlenwasserstoffe wie Toluol und insbesondere Benzine eines Siedebereichs von 60 bis 120 °C; Ketone, insbesondere Aceton, Methylethylketon, Methylisobutylketon; Ester wie Essigsäureethylester sowie Gemische der vorstehend genannten Lösungsmittel. Besonders bevorzugte Lösungsmittel sind Gemische, die Isopropanol in Mengen von 2 bis 15 Gew.-%, insbesondere von 3 bis 10 Gew.-%, jeweils bezogen auf das eingesetzte Lösungsmittelgemisch, enthalten.

Das Poly(meth)acrylat bzw. die Poly(meth)acrylate der erfindungsgemäßen Haftklebmasse sind bevorzugt durch Verknüpfungsreaktionen - insbesondere im Sinne von Additions- oder Substitutionsreaktionen oder auch koordinativen Verknüpfungsreaktionen - der enthaltenen Carbonsäurefunktionen mit speziellen Verbindungen - sogenannten Vernetzern - vernetzt. Die Positionen innerhalb der Vernetzermoleküle, von denen aus die Makromoleküle angegriffen werden, werden auch als "reaktive Zentren" bezeichnet. Vernetzermoleküle enthalten zwei oder mehr reaktive Zentren und sind daher in der Lage, zwei oder mehr Makromoleküle miteinander zu verknüpfen. Es kommt dabei gelegentlich auch zu unerwünschten Nebenreaktionen, bei denen die reaktiven Zentren ein- und desselben Vernetzermoleküls mit nur einem Makromolekül abreagieren.

Grundsätzlich lassen sich zwei Arten von Vernetzern unterscheiden:
1) Kovalente Vernetzer, deren reaktive Zentren die Poly(meth)acrylat-Makromoleküle kovalent angreifen und daher eine kovalente Bindung zwischen reaktivem Zentrum des Vernetzers und der angegriffenen Carbonsäuregruppe des Makromoleküls ausbilden. Grundsätzlich kommen alle Reaktionstypen zur Ausbildung kovalenter Bindungen in Betracht.
2) Koordinative Vernetzer, deren reaktive Zentren die Poly(meth)acrylat-Makromoleküle koordinativ angreifen und daher eine koordinative Bindung zwischen reaktivem Zentrum des Vernetzers und der angegriffenen Carbonsäuregruppe des Makromoleküls ausbilden. Grundsätzlich kommen alle Reaktionstypen zur Ausbildung koordinativer Bindungen in Betracht.

In einer Ausführungsform ist das Poly(meth)acrylat der erfindungsgemäßen Haftklebmasse zumindest kovalent mit einem oder mehreren Vernetzern ausgewählt aus der Gruppe bestehend aus Glycidylaminen, multifunktionellen Epoxiden, multifunktionellen Aziridinen und multifunktionellen Isocyanaten vernetzt. Besonders bevorzugt ist das Poly(meth)acrylat der erfindungsgemäßen Haftklebmasse zumindest kovalent mit einem oder mehreren Vernetzern ausgewählt aus der Gruppe bestehend aus N,N,N',N'-Tetrakis(2,3-epoxypropyl)cyclohexyl-1,3-dimethylamin, N,N,N',N'-Tetrakis(2,3-epoxypropyl)-m-xylyl-α,α'-diamin, (3,4-Epoxycyclohexyl)methyl-3,4-epoxycyclohexylcarboxylat, Trimethylolpropan-tris(2-methyl-1-aziridinpropionat), Tolylendiisocyanat (TDI), 2,4-Tolylendiisocyanat-Dimer, Naphthylen-1,5-diisocyanate (NDI), o-Tolylendiisocyanate (TODI), Diphenylmethandiisocyanate (MDI), Triphenylmethantriisocyanate, Tris-(p-isocyanatophenyl)thiophosphat und Polymethylene-polyphenyl-isocyanat vernetzt.

Die Poly(meth)acrylate der erfindungsgemäßen Haftklebmasse können mit einem oder mehreren kovalenten Vernetzern, einem oder mehreren koordinativen Vernetzern oder mit einem Gemisch aus jeweils einem oder mehreren kovalenten und koordinativen Vernetzern vernetzt sein.

Bevorzugt enthält die erfindungsgemäße Haftklebmasse kovalente Vernetzer zu insgesamt 0,015 bis 0,1 Gew.-%, besonders bevorzugt zu insgesamt 0,02 bis 0,075 Gew.-%, jeweils bezogen auf das Gesamtgewicht der Poly(meth)acrylate.

Die erfindungsgemäße Haftklebmasse enthält ferner mindestens eine aromatische Organophosphorverbindung als Flammschutzmittel. Bevorzugt ist die Organophosphorverbindung halogenfrei. Die Organophosphorverbindung ist bevorzugt ausgewählt aus der Gruppe bestehend aus Phosphorsäureestern und Iminophosphoranen.

Besonders bevorzugt ist die Organophosphorverbindung eine aromatische Organophosphorverbindung, insbesondere ein aromatischer Phosphorsäureester. "Aromatisch" bedeutet dabei, dass die betreffende Verbindung mindestens eine aromatische Struktureinheit, z.B. einen aromatischen Substituenten, aufweist. Ganz besonders bevorzugt ist die Organophosphorverbindung ausgewählt aus der Gruppe bestehend aus Triphenylphosphat, Resorcinolbis(diphenylphosphat), und Bisphenol-A-bis(diphenylphosphat). Beispielsweise ist die Organophosphorverbindung ausgewählt aus Resorcinolbis(diphenylphosphat), und Bisphenol-A-bis(diphenylphosphat), insbesondere ist sie Bisphenol-A-bis(diphenylphosphat).

Die Haftklebmasse kann eine oder mehrere Organophosphorverbindungen enthalten. Bevorzugt enthält die erfindungsgemäße Haftklebmasse Organophosphorverbindungen zu insgesamt mindestens 15 Gew.-%, stärker bevorzugt zu mindestens 18 Gew.-%.

Die erfindungsgemäße Haftklebmasse kann über die bis hierhin aufgeführten Bestandteile hinaus weitere Bestandteile enthalten. Die erfindungsgemäße Haftklebmasse enthält mindestens einen Kolophoniumester. als Klebharz, auch als Klebkraftverstärker oder Tackifier bezeichnet. Unter einem "Tackifier" wird entsprechend dem allgemeinem Fachmannverständnis ein oligomeres oder polymeres Harz verstanden, das die Autohäsion (den Tack, die Eigenklebrigkeit) der Haftklebmasse im Vergleich zu der keinen Tackifier enthaltenden, ansonsten aber identischen Haftklebmasse erhöht.

Es kommen grundsätzlich alle bekannten, mit Poly(meth)acrylaten verträglichen Klebharze in Frage. Bevorzugt umfasst die Haftklebmasse mindestens ein Klebharz ausgewählt aus Terpenphenolharzen und Kolophoniumestern, wobei die Haftklebmasse erfindungsgemäß mindestens einen Kolophoniumester enthält. Der Kolophoniumester ist insbesondere ein Pentaerythritolkolophoniumester. Wie sich gezeigt hat, lässt sich damit die Flammschutzwirkung weiter verbessern, was sich insbesondere in minimierten Brennstrecken und einer weiter verminderten Rußbildung ausdrückt.

Vorzugsweise enthält die erfindungsgemäße Haftklebemasse 18 bis 28 Gew.-% Klebharz, wie insbesondere 21 bis 24 Gew.-%.

Ferner kann die erfindungsgemäße Haftklebmasse weitere Additive enthalten, beispielsweise
- Weichmacher, z.B. niedermolekulare Poly(meth)acrylate, Phthalate, wasserlösliche Weichmacher;
- Funktionale Additive, z.B. Initiatoren und Beschleuniger;
- Elektrisch leitfähige Materialien, z.B. konjugierte Polymere, dotierte konjugierte Polymere, Metallpigmente, Metallpartikel, Metallsalze, metallbeschichtete Partikel, z.B. silberbeschichtete Kugeln; Graphit, Leitruße, Kohlenstofffasern, ferromagnetische Additive;
- Schäumungsmittel, Blähmittel, expandierbare Hohlkugeln; letztere aber nur in einer Menge, welche die Flammschutzwirkung nicht negativ beeinträchtigt;
- Compoundierungsmittel, Keimbildner;
- Alterungsschutzmittel, z.B. primäre und sekundäre Antioxidantien; Lichtschutzmittel, Ozonschutzmittel;
- pulver- und granulatförmige Füllstoffe, Farbstoffe und Pigmente, z. B. Fasern, Ruße, Zinkoxide, Titandioxid, Kreiden, Kieselsäuren, Silikate, Voll- oder Hohlglaskugeln, Volloder Hohlpolymerkugeln, keramische Voll- oder Hohlkugeln, Mikrokugeln aus anderen Materialien; und
- organische Füllstoffe.

In einer Ausführungsform enthält die Haftklebmasse mindestens ein Iminophosphoran und/oder mindestens ein Amin. Bevorzugte Iminophosphorane sind Cyclophosphazene. Besonders bevorzugt enthält die Haftklebmasse mindestens ein Phenoxy-substituiertes Cyclophosphazen und/oder mindestens ein sterisch gehindertes N-Alkoxyamin. Insbesondere enthält die Haftklebmasse mindestens ein sterisch gehindertes N-Alkoxyamin, z.B. ein Reaktionsprodukt von N,N"-1,2-Ethandiylbis(1,3-propandiamin) mit Cyclohexan und peroxidiertem N-Butyl-2,2,6,6-tetramethyl-4-piperidinamin-2,4,6-trichlor-1,3,5-triazin (CAS-Nr. 191680-81-6).

Wie sich gezeigt hat, lässt sich mit derartigen Zusatzstoffen die Flammschutzleistung der Haftklebmasse noch weiter optimieren.

Vorzugsweise enthält die erfindungsgemäße Haftklebemasse 15 bis 35 Gew.-%, vorzugsweise 20 bis 30 Gew.-% Flammschutzmittel. Vom Begriff "Flammschutzmittel" sind insbesondere Organophosphorverbindungen, Iminophosphorane und Amine umfasst, ohne dass dies einschränkend zu verstehen ist.

Die Herstellung der erfindungsgemäßen Haftklebmasse erfolgt bevorzugt aus Dispersion bzw. Lösung durch sequenzielles Einmischen der Komponenten, anschließendes Ausformen der Dispersion bzw. Lösung zu einer Bahn und nachfolgendes Entfernen des verwendeten Lösemittels. Bevorzugte Lösemittel sind die bereits bei der Herstellung der Poly(meth)acrylate beschriebenen.

Ein weiterer Gegenstand der Erfindung ist die Verwendung einer erfindungsgemäßen Haftklebmasse als flammgeschützte Haftklebmasse, insbesondere als flammgeschützte Haftklebmasse in der Ausstattung von Flugzeugen, Bahnen, Schiffen, Fahrzeugen und Gebäuden.

Die erfindungsgemäße Haftklebmasse wird dabei in einer Ausführungsform zur Herstellung permanenter Verklebungen in Innenräumen verwendet, besonders bevorzugt zum Fixieren von Wärmedämmmaterial, insbesondere zwischen Innen- und Außenwand; zum Fixieren nicht textiler Fußböden in Feuchträumen, z.B. in Küchen und Toiletten; zum Fixieren von Bodenbelägen allgemein; als Klebmasse für Feuchtigkeits-Barriereanwendungen und/oder in Korrosionsschutzanwendungen und/oder zum Fixieren von Spiegeln und/oder Leuchten.

In einer weiteren Ausführungsform wird die erfindungsgemäße Haftklebmasse zur Herstellung von Verklebungen, bevorzugt von permanenten Verklebungen, in Elektromobilen verwendet. Besonders bevorzugt wird die Haftklebmasse dabei zur Herstellung von Verklebungen in der Batterie verwendet, insbesondere zur Herstellung von Montageverklebungen (Mounting), beispielsweise zur Verklebung von feuerfesten Materialien zwischen Batteriezellen; zum Verkleben flexibler Leiterplatten; zum Verkleben von Schäumen, insbesondere von Silikonschäumen; zur Herstellung von Verklebungen zum Zwecke der elektrischen Isolation von Batteriemodulen und/oder -Bauteilen, insbesondere der elektrischen Isolation von Batteriezellen (Battery Cell Wrapping) und/oder der Heiz-/Kühlplatte.

### Beispiele

### Verwendete Rohstoffe:

| | |
|---|---|
| Butylacrylat: | CAS-Nummer: 141-32-2 |
| Ethylhexylacrylat: | CAS-Nummer: 103-11-7 |
| Methylacrylat: | CAS-Nummer: 96-33-3 |
| Acrylsäure: | CAS-Nummer: 79-10-7 |
| Vazo 67: | 2,2'-Azodi(2-methylbutyronitril), CAS-Nummer 13472-08-7, Akzo Nobel |
| Perkadox 16: | Bis-(4-tert.-Butylcyclohexanyl)-Peroxy-dicarbonat, CAS-Nummer 15520-11-3, Akzo Nobel |
| Dertophene T 105: | Terpenphenolharz, Erweichungspunkt ca. 105 °C; MW ~ 850 g/mol; DRT |
| Foral 105 E: | hydrierter Pentaerythritol-Kolophoniumester, Erweichungspunkt ca. 100 °C; MW ~ 1.002 g/mol; Eastman |
| Erisys GA 240 : | N,N,N',N'-Tetrakis(2,3-epoxypropyl)-m-xylen-α,α'-diamin, Emerald Performance Materials |
| GC-BDP: | Bisphenol-A-bis(diphenylphosphat), CAS-Nummer: 5945-33-5; GREENCHEMICALS SPA |
| GC-TPP: | Triphenylphosphat, CAS-Nummer 115-86-6; GREENCHEMICALS SPA |
| NORD-MIN RDP: | Tetraphenyl-m-phenylenbis(phosphat) (Resorcinolbis(diphenylphosphat)), CAS-Nummer 57583-54-7; Nordmann |
| Rabitle FP 110: | Phenoxyphosphazen; Fushimi pharmaceutical CO., Ltd. |
| Flamestab NOR 116 FF: | CAS-Nummer: 191680-81-6; BASF SE |

### Herstellung der Polyacrylate:

### Polyacrylat 1

Ein für radikalische Polymerisationen unter Siedekühlung geeigneter, konventioneller 2 L-Glasreaktor wurde mit 300 g einer Monomermischung aus 201 g n-Butylacrylat, 90 g 2-Ethylhexylacrylat und 9 g Acrylsäure sowie 200 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67^{®}, Akzo Nobel), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,15 g Vazo 67^{®}, gelöst in 6 g Aceton, hinzugegeben. Nach 3 Stunden wurde mit 90 g Siedegrenzenbenzin 60/95 verdünnt.

Nach 5 h 30 min Reaktionszeit wurden 0,45 g Bis-(4-tert.-Butylcyclohexanyl)-Peroxydicarbonat (Perkadox 16^{®}, Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16^{®}, Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt.

Das sich ergebende Polyacrylat 1 weist eine Glasübergangstemperatur (T_{g}) gemäß Testmethode A von -46°C auf.

### Polyacrylat 2

Ein für radikalische Polymerisationen unter Siedekühlung geeigneter, konventioneller 2 L-Glasreaktor wurde mit 300 g einer Monomermischung aus 219 g 2-Ethylhexylacrylat, 60 g Methylacrylat und 21 g Acrylsäure sowie 200 g Aceton: Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67^{®}, Akzo Nobel), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,15 g Vazo 67^{®}, gelöst in 6 g Aceton, hinzugegeben. Nach 3 Stunden wurde mit 90 g Siedegrenzenbenzin 60/95 verdünnt.

Nach 5 h 30 min Reaktionszeit wurden 0,45 g Bis-(4-tert.-Butylcyclohexanyl)-Peroxy-dicarbonat (Perkadox 16^{®}, Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16^{®}, Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt.

Das sich ergebende Polyacrylat 2 weist eine Glasübergangstemperatur (T_{g}) gemäß Testmethode A von etwa -34°C auf.

### Herstellung der Haftklebmassen:

### Beispiel 1

In der Lösung des Polyacrylats 1 wurde das Terpenphenolharz Dertophene T 105 im Gewichtsverhältnis 70:30, bezogen auf den Feststoffgehalt an Polymer, gelöst. Zu dieser Lösung wurde Bisphenol-A-diphenylphosphat gegeben, so dass der Masseanteil in der Mischung fest bei 30% lag. Anschließend wurde mit Aceton verdünnt, so dass ein Endfeststoffgehalt von 38 % erreicht wurde. Die Mischung wurde auf eine Rollbank gelegt, bis eine homogene Lösung entstanden war (ca. 12 h). Danach wurde eine Vernetzerlösung (3 Gew.-% Erysis GA 240 in Aceton) mit einer Dosierung von 0,075 Gewichtsteilen, bezogen auf 100 Gewichtsteile Polymer, zugegeben und die Klebmasse in einer Dicke von 100 µm mittels eines Streichrakels auf einem Laborstreichtisch auf einer silikonisierten Folie beschichtet. Die Beschichtungen wurden anschließend bei 120 °C für 15 min getrocknet.

### Beispiele 2-9

Es wurde jeweils wie in Beispiel 1 vorgegangen. Die Zusammensetzung der Klebmassen ist in Tabelle 1 angegeben.

### Herstellung der Prüfmuster:

Für die Prüfungen wurde auf die Klebmasse eine 23 µm dicke, mit Trichloressigsäure geätzte PET-Folie kaschiert. Auf die massefreie Seite der Folie wurde nochmals eine 100 µm dicke Klebmasseschicht kaschiert, so dass ein doppelseitiges Tape entstand.

### Prüfmethoden:

### Klebkraft

Die Bestimmung der Klebkraft CRES Stahl erfolgte bei einem Prüfklima von 23 °C +/- 1 °C Temperatur und 50 % +/- 5 % rel. Luftfeuchte.

Ein 20 mm breiter Streifen des Klebebandmusters wurde auf Stahlplatten aufgebracht, die zuvor zweimal mit Aceton sowie einmal mit Isopropanol gewaschen und danach 5 Minuten an der Luft liegen gelassen wurden, damit das Lösungsmittel abdampfen kann. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 90° vom Substrat abgezogen. Die Messergebnisse sind in N/cm angegeben und sind gemittelt aus drei Messungen.

### Statischer Schertest

Die Bestimmung der Scherfestigkeit erfolgte bei einem Prüfklima von 23 °C +/- 1 °C Temperatur und 50 % +/- 5 % rel. Luftfeuchte.

Die Prüfmuster wurden auf eine Breite von 13 ± 0,2 mm zugeschnitten und für mindestens 16 h im Klima gelagert. Für die Prüfung wurden 50 x 25 mm ASTM-Stahl Platten mit 2 mm Dicke und einer 20 mm Markierungslinie verwendet, die vor der Verklebung mehrfach intensiv mit Aceton gereinigt und danach 1 - 10 Min trocknen gelassen wurden. Die Verklebungsfläche betrug 13 x 20 ± 0,2 mm. Der Prüfstreifen wurde unter Vermeidung von Lufteinschlüssen durch Überstreichen mit dem Finger oder einem geeigneten Anwischer in Längsrichtung mittig auf den Haftgrund aufgebracht, so dass die obere Kante des Prüfmusters genau an der 20 mm Markierungslinie anlag.

Da die geprüften Muster doppelseitig waren, wurde die Rückseite mit Aluminiumfolie abgeklebt. Das freie überstehende Ende wurde mit Papier oder einem Kartenblatt abgeklebt. Sodann wurde der Klebestreifen 2-mal mit einer 2 kg Rolle hin und her überrollt. Nach dem Anrollen wurde eine Gurtschlaufe (Gewicht 5 - 7 g) am überstehenden Ende des Klebebandes angebracht.

Danach wurde mit Schraube und Mutter ein Adapterplättchen auf der Vorderseite der Schertestplatte befestigt. Um sicherzustellen, dass das Adapterplättchen fest auf der Platte sitzt, wurde die Schraube kräftig von Hand angezogen.

Die so vorbereitete Platte wurde über das Adapterplättchen mittels eines Hakens an einer Zähleruhr befestigt; in die Gurtschlaufe wurde dann ein 1 kg Gewicht ruckfrei eingehängt.

Die Aufziehzeit zwischen Anrollen und Belastung betrug 12 min. Gemessen wurde die Zeit in Minuten bis zum Versagen der Verklebung, die Messergebnisse sind gemittelt aus drei Messungen.

### 12s Vertikaler Bunsenbrennertest

Der 12s vertikale Bunsenbrennertest wird nach der FAR 25.853 (Appendix F Part I (a)(1)(II)) durchgeführt: Die Probe wird in vertikaler Position freihängend, das heißt ohne, dass sie auf einem Substrat verklebt ist, in einem U-Rahmen gehalten, und eine Bunsenbrennerflamme wird von unten für 12 s angelegt. Nach Ablauf der Beflammungsdauer von 12 s wird der Brenner entfernt und das Material beobachtet. Die folgenden Parameter werden dokumentiert:
a) Durchschnittliche Nachbrenndauer: Zeit in s, während der die Probe brennt, nachdem die Brennerflamme entfernt wurde;
b) Durchschnittliche Tropfenbrenndauer: Zeit in s, während der das brennende Material weiter brennt, nachdem es von der Probe gefallen ist;
c) Durchschnittliche Brennlänge: Entfernung von der initialen Probenkante zu der am weitesten entfernten Stelle, an der die Probe beschädigt ist.

### Es wurden mindestens 3 Prüfkörper geprüft.

Die Muster werden als flammgeschützt angesehen, wenn die nachstehend aufgeführten Anforderungen nach der Norm FAR 25.853 (Appendix F Part I (a)(1)(II)) erfüllt wurden:

| | |
|---|---|
| Durchschnittliche Nachbrenndauer: | < 15 s |
| Durchschnittliche Tropfenbrenndauer: | < 5 s |
| Durchschnittliche Brennlänge: | < 203,2 mm. |

Die Ergebnisse der Prüfungen sind in Tabelle 1 enthalten.

**Tabelle 1: Zusammensetzungen der Beispiele und Ergebnisse**

| Beispiel Nr. Zusammensetzung | 1 (Vgl.) | 2 (Vgl.) | 3 | 4 | 5 | 6 | 7 | 8 | 9 |
|---|---|---|---|---|---|---|---|---|---|
| Polyacrylat 1 | 49% | | | | | | | | |
| Polyacrylat 2 | | 49% | 49% | 49% | 55,3% | 55,3% | 55,3% | 55,3% | 55,3% |
| Dertophene T 105 | 21% | 21% | | | | | | | |
| Foral 105-E | | | 21% | 21% | 23,7% | | | 23,7% | 23,7% |
| Foral 85-E | | | | | | 23,7% | | | |
| Foral AX | | | | | | | 23,7% | | |
| Bisphenol-A-bis(diphenylphosphat) | 30% | 30% | 30% | 20% | 20% | 20% | 20% | | |
| Resorcinolbis(diphenyl)-phosphat | | | | | | | | 20% | |
| Triphenylphosphat | | | | | | | | | 20% |
| Rabitle FP 110 | | | | 10% | | | | | |
| Flamestab NOR 116 FF | | | | | 1% | 1% | 1% | 1% | 1% |
| Erysis GA 240 | 0,04% | 0,04% | 0,04% | 0,04% | 0,04% | 0,04% | 0,04% | 0,04% | 0,04% |

| Beispiel Nr. | **1** | **2** | **3** | **4** | **5** | **6** | **7** | **8** | **9** |
|---|---|---|---|---|---|---|---|---|---|
| Klebkraft 90° CRES [N/cm] | 7,2 | 12,9 | 10,5 | 11,0 | 12,0 | 5,6 | 5,1 | 3 | 4,4 |
| Scherstandzeit RT [min] | 633 | 3312 | 2888 | 4595 | 7213 | 2140 | 1532 | 718 | 6878 |
| Brennstrecke [mm] | 213 | 175 | 165 | 78 | 25 | 75 | 200 | 28 | 62 |
| Nachbrenndauer [s] | 0 | 14 | 7 | 0 | 0 | 0 | 8,4 | 0 | 0 |
| Nachbrenndauer Tropfen [s] | 0 | 0 | 1 | 0 | 0 | 1 | 1 | 0 | 0 |
| Rußbildung | Ja | Ja | Nein | Nein | Nein | Nein | Nein | Nein | Nein |

## Patentansprüche

1. Haftklebmasse, enthaltend:
- mindestens ein Poly(meth)acrylat und
- mindestens eine aromatische Organophosphorverbindung als Flammschutzmittel;
**dadurch gekennzeichnet, dass**
die dem Poly(meth)acrylat zugrundeliegende Monomerenzusammensetzung
- mindestens einen (Meth)acrylsäureester, dessen Alkoholkomponente mehr als 4 C-Atome enthält;
- mindestens einen (Meth)acrylsäureester, dessen Alkoholkomponente maximal 4 C-Atome enthält; und
- Acrylsäure und/oder (Meth)acrylsäure zu insgesamt mindestens 5 Gew.-%
umfasst; und die Haftklebmasse mindestens einen Kolophoniumester enthält.

2. Haftklebmasse gemäß Anspruch 1, **dadurch gekennzeichnet, dass** die Glasübergangstemperatur des Poly(meth)acrylats gemäß Testmethode A der Beschreibung < 0 °C, bevorzugt zwischen -20 und -50 °C, insbesondere zwischen -25 und -40 °C, wie zum Beispiel zwischen -28 und -35 °C beträgt.

3. Haftklebmasse gemäß einem der vorhergehenden Ansprüche, **dadurch gekennzeichnet, dass**
der mindestens eine (Meth)acrylsäureester, dessen Alkoholkomponente mehr als 4 C-Atome enthält, in der dem Poly(meth)acrylat zugrundeliegenden Monomerenzusammensetzung zu insgesamt 50 bis 90 Gew.-%, bevorzugt zu insgesamt 60 bis 80 Gew.-%, und insbesondere zu insgesamt 65 bis 75 Gew.-% enthalten ist.

4. Haftklebmasse gemäß einem der Ansprüche 1 oder 2, **dadurch gekennzeichnet, dass** der mindestens eine (Meth)acrylsäureester, dessen Alkoholkomponente maximal 4 C-Atome enthält, in der dem Poly(meth)acrylat zugrundeliegenden Monomerenzusammensetzung zu insgesamt 10 bis 40 Gew.-%, bevorzugt zu insgesamt 15 bis 30 Gew.-%, und insbesondere zu insgesamt 20 bis 25 Gew.-% enthalten ist.

5. Haftklebmasse gemäß einem der vorhergehenden Ansprüche, **dadurch gekennzeichnet, dass**
in der dem Poly(meth)acrylat zugrundeliegenden Monomerenzusammensetzung zu mehr als 15 Gew.-%, vorzugsweise mehr als 17%, wie zum Beispiel 20 bis 30 Gew.-% Methylacrylat enthalten ist.

6. Haftklebmasse gemäß einem der vorstehenden Ansprüche, **dadurch gekennzeichnet, dass**
die Haftklebmasse Organophosphorverbindungen zu insgesamt mindestens 15 Gew.-%, bezogen auf das Gesamtgewicht der Haftklebmasse, enthält.

7. Haftklebmasse gemäß einem der vorstehenden Ansprüche, **dadurch gekennzeichnet, dass**
die Organophosphorverbindung Bisphenol-A-bis(diphenylphosphat) ist.

8. Haftklebmasse einem der vorstehenden Ansprüche, **dadurch gekennzeichnet, dass** der Kolophoniumester ein Pentaerythritolkolophoniumester ist.

9. Haftklebmasse gemäß einem der vorstehenden Ansprüche, **dadurch gekennzeichnet, dass**
die Haftklebmasse mindestens ein Iminophosphoran, vorzugsweise mindestens ein Cyclophosphazen und insbesondere mindestens ein Phenoxy-substituiertes Cyclophosphazen enthält.

10. Haftklebmasse gemäß einem der Ansprüche 1 bis 8, **dadurch gekennzeichnet, dass** die Haftklebmasse mindestens ein Amin wie beispielsweise ein sterisch gehindertes N-Alkoxyamin enthält, und gegebenenfalls zusätzlich mindestens ein Iminophosphoran.

11. Verwendung einer Haftklebmasse gemäß einem der vorstehenden Ansprüche als flammgeschützte Haftklebmasse.

## Claims

1. Pressure-sensitive adhesive comprising:
- at least one poly(meth)acrylate and
- at least one aromatic organophosphorus compound as flame retardant;
**characterized in that**
the monomer composition forming the basis for the poly(meth)acrylate comprises
- at least one (meth)acrylic ester whose alcohol component contains more than 4 carbon atoms;
- at least one (meth)acrylic ester whose alcohol component contains not more than 4 carbon atoms; and
- acrylic acid and/or methacrylic acid at a total of at least 5 wt%;
and the pressure-sensitive adhesive comprises at least one rosin ester.

2. Pressure-sensitive adhesive according to Claim 1, **characterized in that**
the glass transition temperature of the poly(meth)acrylate by test method A in the description is < 0°C, preferably between -20 and -50°C, more particularly between -25 and -40°C, such as, for example, between -28 and -35°C.

3. Pressure-sensitive adhesive according to either of the preceding claims, **characterized in that** the at least one (meth)acrylic ester whose alcohol component contains more than 4 carbon atoms is present in the monomer composition forming the basis for the poly (meth) acrylate at a total of 50 to 90 wt%, preferably at a total of 60 to 80 wt%, and more particularly at a total of 65 to 75 wt%.

4. Pressure-sensitive adhesive according to either of Claims 1 and 2, **characterized in that**
the at least one (meth)acrylic ester whose alcohol component contains not more than 4 carbon atoms is present in the monomer composition forming the basis for the poly (meth) acrylate at a total of 10 to 40 wt%, preferably at a total of 15 to 30 wt%, and more particularly at a total of 20 to 25 wt%.

5. Pressure-sensitive adhesive according to any of the preceding claims, **characterized in that**
the monomer composition forming the basis for the poly (meth) acrylate comprises methyl acrylate at more than 15 wt%, preferably more than 17%, such as, for example, 20 to 30 wt%.

6. Pressure-sensitive adhesive according to any of the preceding claims, **characterized in that**
the pressure-sensitive adhesive comprises organophosphorus compounds at a total of at least 15 wt%, based on the total weight of the pressure-sensitive adhesive.

7. Pressure-sensitive adhesive according to any of the preceding claims, **characterized in that**
the organophosphorus compound is bisphenol A bis(diphenyl phosphate).

8. Pressure-sensitive adhesive according to any of the preceding claims, **characterized in that**
the rosin ester is a pentaerythritol rosin ester.

9. Pressure-sensitive adhesive according to any of the preceding claims, **characterized in that**
the pressure-sensitive adhesive comprises at least one iminophosphorane, preferably at least one cyclophosphazene and more particularly at least one phenoxy-substituted cyclophosphazene.

10. Pressure-sensitive adhesive according to any of Claims 1 to 8, **characterized in that**
the pressure-sensitive adhesive comprises at least one amine such as, for example, a sterically hindered N-alkoxyamine, and optionally additionally at least one iminophosphorane.

11. Use of a pressure-sensitive adhesive according to any of the preceding claims as a flame-retardant pressure-sensitive adhesive.

## Revendications

1. Masse adhésive de contact, contenant :
- au moins un poly(méth)acrylate et
- au moins un composé organophosphoré aromatique en tant qu'agent d'ignifugation,
**caractérisée en ce que**
la composition de monomères qui est à la base du poly(méth)acrylate comprend
- au moins un ester de l'acide (méth)acrylique, dont le composant alcool contient plus de 4 atomes de carbone ;
- au moins un ester de l'acide (méth)acrylique dont le composant alcool contient au maximum 4 atomes de carbones ; et
- de l'acide acrylique et/ou de l'acide (méth)acrylique, pour une quantité totale d'au moins 5 % en poids ;
et la masse adhésive de contact contient au moins un ester de colophane.

2. Masse adhésive de contact selon la revendication 1, **caractérisée en ce que** la température de transition vitreuse du poly(méth)acrylate selon la méthode d'essai A de la description est < 0 °C, de préférence entre -20 et -50 °C, en particulier entre -25 et -40 °C, et par exemple entre -28 et -35 °C.

3. Masse adhésive de contact selon l'une des revendications précédentes, **caractérisée en ce que** l'au moins un ester de l'acide (méth)acrylique dont le composant alcool contient plus de 4 atomes de carbone est contenu dans la composition de monomères qui est à base du poly(méth)acrylate en une quantité totale de 50 à 90 % en poids, de préférence en une quantité totale de 60 à 80 % en poids et en particulier en une quantité totale de 65 à 75 % en poids.

4. Masse adhésive de contact selon l'une des revendications 1 ou 2, **caractérisée en ce que** l'au moins un ester de l'acide (méth)acrylique dont le composant alcool contient au plus 4 atomes de carbone est contenu dans la composition de monomères qui est à la base du poly(méth)acrylate en une quantité totale de 10 à 40 % en poids, de préférence en une quantité totale de 15 à 30 % en poids et en particulier en une quantité totale de 20 à 25 % en poids.

5. Masse adhésive de contact selon l'une des revendications précédentes, **caractérisée en ce que** la composition de monomères qui est à la base du poly(méth)acrylate contient jusqu'à plus de 15 % en poids, de préférence plus de 17 % en poids, par exemple 20 à 30 % en poids d'acrylate de méthyle.

6. Masse adhésive de contact selon l'une des revendications précédentes, **caractérisée en ce que** la masse adhésive de contact contient des composés organophosphorés en une quantité totale d'au moins 15 % en poids par rapport au poids total de la masse adhésive de contact.

7. Masse adhésive de contact selon l'une des revendications précédentes, **caractérisée en ce que** le composé organophosphoré est le bis(diphénylphosphate) de bisphénol A.

8. Masse adhésive de contact selon l'une des revendications précédentes, **caractérisée en ce que** l'ester de colophane est un ester de pentaérythritolcolophane.

9. Masse adhésive de contact selon l'une des revendications précédentes, **caractérisée en ce que** la masse adhésive de contact contient au moins un iminophosphorane, de préférence au moins un cyclophosphazène et en particulier au moins un cyclophosphazène à substitution phénoxy.

10. Masse adhésive de contact selon l'une des revendications 1 à 8, **caractérisée en ce que** la masse adhésive de contact contient au moins une amine, par exemple une N-alcoxyamine à empêchement stérique, et éventuellement en outre au moins un iminophosphorane.

11. Utilisation d'une masse adhésive de contact selon l'une des revendications précédentes en tant que masse adhésive de contact ignifugée.
